(19) Europäisches Patentamt / European Patent Office / Office européen des brevets

(11) **EP 3 504 559 B1**

(12) **FASCICULE DE BREVET EUROPEEN**

(45) Date de publication et mention de la délivrance du brevet:
**13.10.2021 Bulletin 2021/41**

(21) Numéro de dépôt: **17752152.3**

(22) Date de dépôt: **21.08.2017**

(51) Int Cl.:
*G01S 7/481* (2006.01)          *G01S 17/32* (2020.01)
*G01S 17/58* (2006.01)          *G01S 7/48* (2006.01)
*G01S 7/493* (2006.01)          *G01S 7/491* (2020.01)

(86) Numéro de dépôt international:
**PCT/EP2017/070994**

(87) Numéro de publication internationale:
**WO 2018/036946 (01.03.2018 Gazette 2018/09)**

(54) **METHODE DE TRAITEMENT D'UN SIGNAL ISSU D'UN LIDAR COHERENT ET SYSTEME LIDAR ASSOCIE**

VERFAHREN ZUR VERARBEITUNG EINES SIGNALS AUS KOHÄRENTEM LIDAR UND ZUGEHÖRIGES LIDAR-SYSTEM

METHOD FOR PROCESSING A SIGNAL ARISING FROM COHERENT LIDAR AND ASSOCIATED LIDAR SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.08.2016 FR 1601251**

(43) Date de publication de la demande:
**03.07.2019 Bulletin 2019/27**

(73) Titulaire: **Thales**
**92400 Courbevoie (FR)**

(72) Inventeurs:
• **FENEYROU, Patrick**
  **91430 Igny (FR)**
• **PILLET, Grégoire**
  **78851 Elancourt Cedex (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 2 618 179**

• **GAO AND R HUI S: "Frequency-modulated continuous-wave lidar using I/Q modulator for simplified heterodyne detection", OPTICS LETTERS, OPTICAL SOCIETY OF AMERICA, vol. 37, no. 11, 1 juin 2012 (2012-06-01), pages 2022-2024, XP001575882, ISSN: 0146-9592, DOI: 10.1364/OL.37.002022 [extrait le 2012-05-30]**
• **Shuang Gao: "Complex-optical-field lidar system for range and vector velocity measurement", OPTICS EXPRESS, 1 novembre 2012 (2012-11-01), XP055058815, DOI: 10.1364/OE.20.025867 Extrait de l'Internet: URL:http://www.opticsinfobase.org/DirectPD FAccess/49B4A532-A83A-9804-84C82977F983D 5F 2_244858/oe-20-23-25867.pdf?da=1&id=244858 &seq=0&mobile=no [extrait le 2013-04-09]**
• **AMZAJERDIAN FARZIN ET AL: "Lidar systems for precision navigation and safe landing on planetary bodies", INTERNATIONAL SYMPOSIUM ON PHOTOELECTRONIC DETECTION AND IMAGING 2011: LASER SENSING AND IMAGING; AND BIOLOGICAL AND MEDICAL APPLICATIONS OF PHOTONICS SENSING AND IMAGING, SPIE, 1000 20TH ST. BELLINGHAM WA 98225-6705 USA, vol. 8192, no. 1, 9 juin 2011 (2011-06-09) , pages 1-7, XP060016360, DOI: 10.1117/12.904062 cité dans la demande**

EP 3 504 559 B1

**Description**

**DOMAINE DE L'INVENTION**

L'invention concerne le domaine des lidars cohérents à modulation de fréquence utilisés par exemple pour la détection de cible à longue distance.

**ETAT DE LA TECHNIQUE**

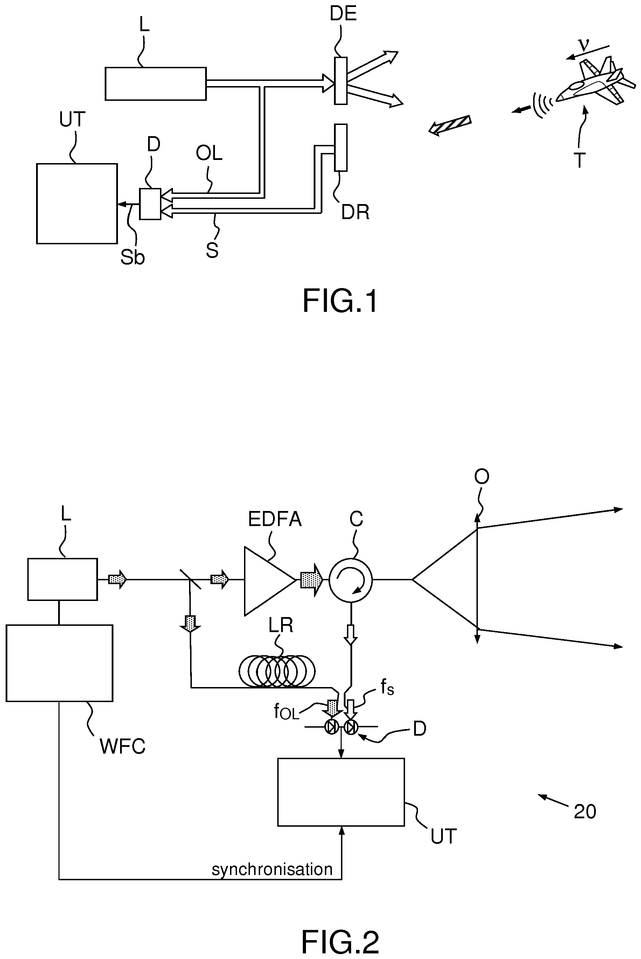

Le principe d'un lidar cohérent est bien connu de l'état de la technique et illustré figure 1. Un lidar cohérent comprend une source cohérente L, typiquement un laser qui émet une onde lumineuse cohérente (domaine IR, visible ou UV proche), un dispositif d'émission DE qui permet d'illuminer un volume de l'espace, et un dispositif de réception DR, qui collecte une fraction de l'onde lumineuse rétrodiffusée par une cible T. Le décalage de fréquence Doppler $v_{Dop}$ de l'onde rétrodiffusée est fonction de la vitesse radiale v de la cible T.

A la réception on effectue un mélange entre l'onde lumineuse rétrodiffusée reçue S de fréquence fs et une partie de l'onde émise dénommée onde OL pour « oscillateur local ». L'interférence de ces deux ondes est détectée par un photodétecteur D, et le signal électrique en sortie du détecteur présente un terme oscillant dénommé signal de battement Sb, en plus des termes proportionnels à la puissance reçue et à la puissance d'oscillateur local. Une unité de traitement UT numérise ce signal et en extrait l'information de vitesse v de la cible T.

Préférentiellement l'unité de traitement filtre électroniquement le signal de battement Sb dans une bande étroite centrée sur la fréquence nulle, en l'absence de décalage de fréquence (voir plus loin).

Pour les lidars cohérents, les dispositifs d'émission et de réception utilisent préférentiellement une même optique (lidar monostatique). Cette caractéristique permet d'obtenir une bonne stabilité mécanique et de réduire l'influence des turbulences atmosphériques à longue distance, les trajets de propagation des ondes incidente et rétrodiffusée étant confondus.

Une solution pour la télémétrie/vélocimétrie par lidar consiste à réaliser un système à modulation de fréquence. Cette technique, classique en radar, trouve un intérêt particulier actuellement compte tenu des progrès des sources lasers fibrées. Grâce à la modulation de fréquence, une analyse temps/fréquence permet de remonter à la distance d de la cible et à sa vitesse v. Ce type de lidar permet également de réaliser une fonction d'anémométrie laser.

Un exemple d'architecture optique d'un lidar à modulation de fréquence 20 est décrit figure 2. La source cohérente est modulée en fréquence de manière à ce que la fréquence de l'oscillateur local soit modulée selon une fonction prédéterminée dénommée forme d'onde dont le contrôle est assuré par le module WFC, synchronisé avec l'unité de traitement UT.

Le signal optique à l'émission est amplifié par un amplificateur EDFA, l'émission et la réception utilisent une même optique O et sont séparées à l'aide d'un circulateur C. Ce signal optique peut éventuellement être décalé en fréquence, par exemple à l'aide d'un modulateur acousto-optique qui est préférentiellement positionné avant l'amplificateur EDFA mais peut également être positionné sur le trajet de l'oscillateur local. Dans ce cas le filtrage électronique dans l'unité de traitement est effectué autour de la fréquence de décalage. Une ligne à retard LR permet d'égaliser les chemins optiques de l'oscillateur local et du signal d'émission de manière à filtrer, dans le domaine RF, les défauts des composants optiques placés après l'amplificateur EDFA (défaut de cross-talk du circulateur C, imperfections des traitements anti-reflet de l'optique d'émission/réception O,...).

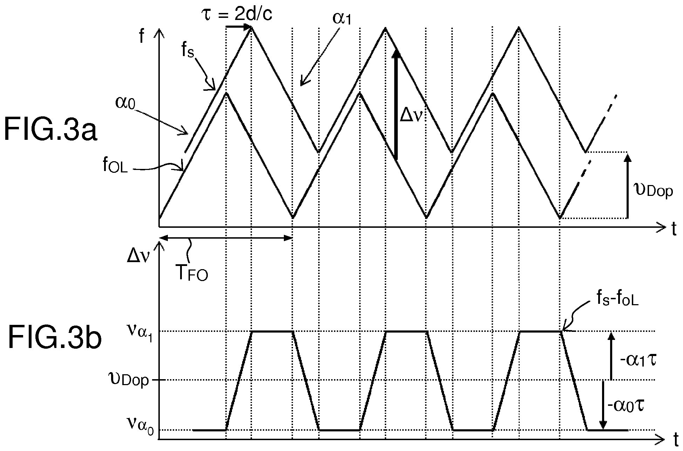

La demande de brevet EP2618179A1 divulgue un exemple de Lidar cohérent comprenant une source cohérente modulée linéairement en fréquence. Un autre exemple d'un lidar cohérent à modulation de fréquence est décrit dans le document « Lidar systems for précision navigation and safe landing on planetary bodies » Farzin Amzajerdian et al, Proc. SPIE 8192, International Symposium on Photoelectronic Détection and Imaging 2011: Laser Sensing and Imaging; and Biological and Médical Applications of Photonics Sensing and Imaging, 819202 (August 19, 2011). La figure 3 décrit le principe de fonctionnement de ce lidar.

On se place dans la description ci-dessous dans le cas où la fréquence optique d'émission et celle de l'oscillateur local ne sont pas décalées à l'aide d'un modulateur acousto-optique. La fréquence de l'oscillateur local $f_{OL}$ est modulée linéairement selon deux pentes de fréquence $\alpha_0$ et $\alpha_1$ de manière périodique de période $T_{FO}$. Cette fréquence optique $f_{OL}$ peut s'écrire comme la somme d'une fréquence optique f0 constante (ici la fréquence initiale du laser) et d'une fréquence de modulation dans le domaine radiofréquence dépendante du temps $f_{mod}(t)$ issue de la modulation de la source laser :

$$f_{OL}(t) = f0 + f_{mod}(t)$$

La figure 3 illustre la variation au cours du temps des fréquences $f_{OL}(t)$ et $f_s(t)$, la fréquence optique f0 ayant été soustraite pour plus de clarté. Comme illustré sur la figure 3a, le signal rétrodiffusé de fréquence fs(t) est décalé temporellement d'un temps $\tau$ du fait de la propagation jusqu'à la zone de mesure (cible T) et donc relié à la distance de la cible d, et est décalé en fréquence d'une valeur $v_{Dop}$ du fait de l'effet Doppler par rapport à la fréquence oscillateur local $f_{OL}(t)$.

Le signal de battement détecté Sb présente une composante de fréquence fs-$f_{OL}$. La figure 3b illustre l'évolution au cours du temps de fs -$f_{OL}$. On constate que cette différence de fréquence comprend en fonction du temps deux séries de plateaux aux fréquences caractéristiques $v_{\alpha 0}$ et $v_{\alpha 1}$, directement reliées à la distance de la cible D et à sa vitesse v radiale par les équations :

$$v_{\alpha_0} = \frac{2\,v}{\lambda} - \frac{2\alpha_0 D}{c} \quad \text{et} \quad v_{\alpha_1} = \frac{2\,v}{\lambda} - \frac{2\alpha_1 D}{c}$$

En mesurant ces deux fréquences caractéristiques $v_{\alpha 0}$ et $v_{\alpha 1}$ du signal de battement Sb, par exemple en réalisant une transformée de Fourier de celui-ci, on remonte à d et v.

Cependant, lorsque la distance à la cible conduit à un temps de vol supérieur à la durée de la forme d'onde $T_{FO}$ normalisée par le nombre de pentes de fréquence (2 dans l'exemple), l'analyse directe par transformée de Fourier est insuffisante. En effet, le mélange de l'oscillateur local et du signal rétrodiffusé conduit à la disparition des plateaux et à une fréquence instantanée constamment variable, qui après analyse par transformée de Fourier, ne présentera aucun pic.

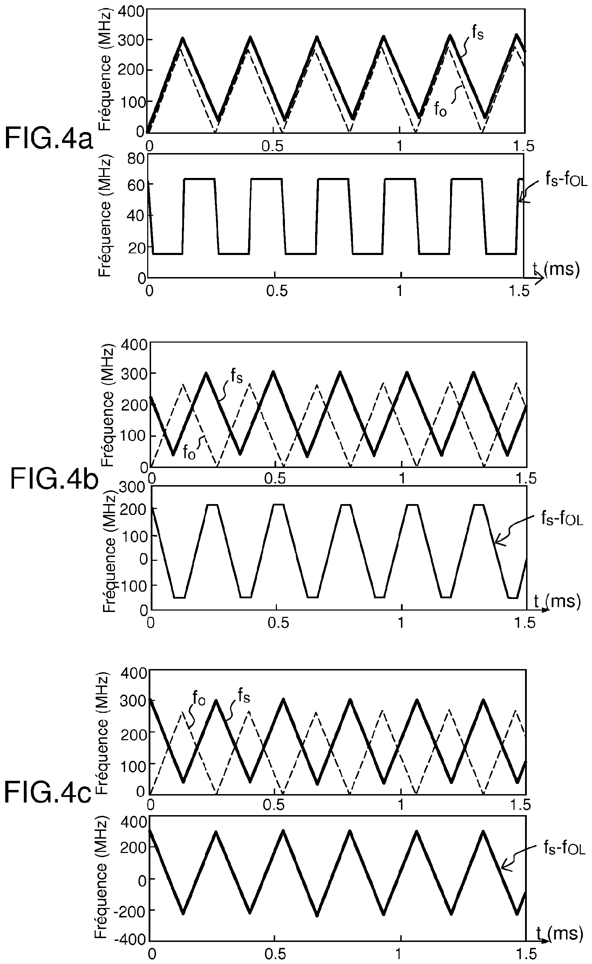

Un exemple de cet effet est illustré figure 4, pour une modulation de l'oscillateur local selon deux pentes de fréquence $\alpha_0$ = 2 MHz/$\mu$s et $\alpha_1$ = - 2 MHz/$\mu$s, et une cible se déplaçant à la vitesse de 30 m/s.

La figure 4a illustre la variation temporelle de fs par rapport à $f_{OL}$ et la composante de fréquence de Sb fs-$f_{OL}$ pour une distance d de 1800m, la figure 4b pour une distance d de 14000 m et la figure 4c pour une distance d de 20000 m.

Dans ce cas la portée du lidar est donc limitée par le traitement du signal quelque soit la puissance du laser. Il est théoriquement possible d'allonger la période de modulation $T_{FO}$ de la forme de d'onde, mais la plage de modulation de certains lasers étant limitée, cet allongement ne permet pas d'atteindre simultanément une résolution élevée à longue distance. En effet, compte tenu de la bande de modulation limitée du laser, il est possible d'accroître la période $T_{FO}$ en réduisant les pentes de fréquences pour couvrir la même bande de modulation. Dans ce cas, les plateaux de fréquence existeront à plus longue distance mais, pour une durée de transformée de Fourier $T_{FFT}$ constante et inférieure à la fréquence de modulation $T_{FO}$, la bande de modulation couverte pendant $T_{FFT}$ sera moindre et donc, la résolution longitudinale, proportionnelle à cette bande, sera dégradée.

Un but de la présente invention est de remédier aux inconvénients précités en proposant une méthode de traitement du signal de battement permettant de s'affranchir de cette limitation en retrouvant un signal présentant les plateaux de fréquences caractéristiques.

## DESCRIPTION DE L'INVENTION

La présente invention a pour objet une méthode de traitement d'un signal issu d'un lidar cohérent comprenant une source cohérente modulée périodiquement en fréquence,

- un signal de battement étant généré par un photodétecteur à partir de l'interférence entre un signal optique dénommé oscillateur local présentant une fréquence d'oscillateur local et un signal optique rétrodiffusé par une cible illuminée par le lidar, ledit signal de battement étant numérisé,
- la fréquence d'oscillateur local étant constituée de la somme d'une valeur moyenne et d'une fréquence de modulation issue de la modulation de la source, la fréquence de modulation étant périodique selon une période de modulation, chaque période comprenant n parties linéaires présentant respectivement n pentes de fréquence, n étant supérieur ou égal à 2,
  la méthode comprenant les étapes consistant à :
- moduler de manière complexe le signal de battement par la fréquence de modulation pour obtenir un signal modulé,
- démoduler de manière complexe le signal modulé par n fréquences de démodulation présentant chacune une pente unique égale à la pente de fréquence respective de la fréquence de modulation, pour obtenir n signaux démodulés,
- déterminer n densités spectrales des n signaux démodulés,
- déterminer n fréquences caractéristiques correspondant respectivement au maximum des n densités spectrales,
- déterminer une information de vitesse et une information de distance de la cible à partir desdites n fréquences caractéristiques.

Selon un mode de réalisation, l'étape de détermination de chaque densité spectrale comprend les sous étapes consistant à :

- déterminer une pluralité de densités spectrales élémentaires pour une pluralité d'intervalles de temps inférieurs ou égaux à la période de modulation
- déterminer ladite densité spectrale à partir de la somme de la pluralité de densités spectrales élémentaires.

Préférentiellement, chaque densité spectrale élémentaire est déterminée par transformée de Fourier rapide ou FFT, et la densité spectrale est égale à une moyenne des densités spectrales élémentaires.

Avantageusement chaque fréquence de démodulation est périodique selon la période de modulation.

Avantageusement les pentes de fréquence sont indicées par un indice i variant de 0 à n-1 et dans laquelle chaque fréquence de démodulation présentant une pente d'indice i est décalée temporellement par rapport à la fréquence de modulation d'un temps de décalage dépendant de i, de n et de la période de modulation.

Selon une variante, la forme d'onde comprend 4 pentes $\alpha0$, $\alpha1$, $\alpha2$, $\alpha3$ avec :

$$\alpha1 = -\alpha0 \text{ et } \alpha3 = -\alpha2$$

L'invention concerne également un système lidar cohérent comprenant :

- une source cohérente modulée périodiquement en fréquence,
- un dispositif d'émission d'un signal optique issu de la source cohérente et un dispositif de réception d'un signal rétrodiffusé par une cible illuminée par le lidar,
- un photodétecteur configuré pour générer un signal de battement à partir de l'interférence entre un signal optique dénommé oscillateur local présentant une fréquence d'oscillateur local et le signal optique rétrodiffusé, la fréquence d'oscillateur local étant constituée de la somme d'une valeur moyenne et d'une fréquence de modulation issue de la modulation de la source, la fréquence de modulation étant périodique selon une période de modulation, chaque période comprenant n parties linéaires présentant respectivement n pentes de fréquence, n étant supérieur ou égal à 2,
- une unité de traitement configurée pour :

   *numériser le signal de battement,
   * moduler de manière complexe le signal de battement par la fréquence de modulation pour obtenir un signal modulé,
   *démoduler de manière complexe le signal modulé par n fréquences de démodulations présentant chacune une pente unique égale à la pente de fréquence respective de la fréquence de modulation pour obtenir n signaux démodulés,
   *déterminer n densités spectrales des n signaux démodulés,
   *déterminer n fréquences caractéristiques correspondant respectivement au maximum des n densités spectrales,
   *déterminer une information de vitesse et une information de distance de la cible à partir desdites n fréquences caractéristiques.

Préférentiellement l'unité de traitement est en outre configurée pour déterminer, pour chaque densité spectrale, une pluralité de densités spectrales élémentaires pour une pluralité d'intervalles de temps inférieurs ou égaux à la période de modulation, ladite densité spectrale étant déterminée à partir de la somme de la pluralité de densités spectrales élémentaires.

Avantageusement chaque densité spectrale élémentaire est déterminée par transformée de Fourier rapide, et dans laquelle la densité spectrale est égale à une moyenne des densités spectrales élémentaires.

Avantageusement l'unité de traitement comprend n voies, une voie par pente, chaque voie fonctionnant en parallèle des autres et étant configurée pour déterminer la fréquence associée.

D'autres caractéristiques, buts et avantages de la présente invention apparaîtront à la lecture de la description détaillée qui va suivre et en regard des dessins annexés donnés à titre d'exemples non limitatifs et sur lesquels :

La figure 1 déjà citée décrit le principe d'un lidar cohérent.
La figure 2 déjà citée décrit un exemple d'architecture optique d'un lidar à modulation de fréquence.
La figure 3a déjà citée illustre la variation au cours du temps des fréquences $f_{OL}(t)$ et $f_s(t)$. La figure 3b déjà citée illustre l'évolution au cours du temps de $f_s - f_{OL}$.
La figure 4a déjà citée illustre la variation temporelle de $f_s$ par rapport à $f_{OL}$ et la composante de fréquence de Sb fs-f$_{OL}$ pour une distance d de 1800m, la figure 4b pour une distance d de 14000 m et la figure 4c pour une distance d de 20000 m.

La figure 5 illustre la méthode de traitement du signal issu d'un lidar cohérent selon l'invention.

La figure 6 schématise la forme d'onde périodique d'une fréquence de modulation f$_{mod}$(t) en fonction du temps, constituée d'une suite de 4 pentes α0, α1, a2 et a3.

La figure 7 illustre le cas d'une cible se déplaçant avec une vitesse de 40 m/s à une distance de 12km, la forme d'onde du signal f$_{mod}$ comprenant 2 pentes α0 = 0.2 MHz/μs et α1 = -0.2 MHz/μs pour une fréquence moyenne du laser de 1.55 μm.

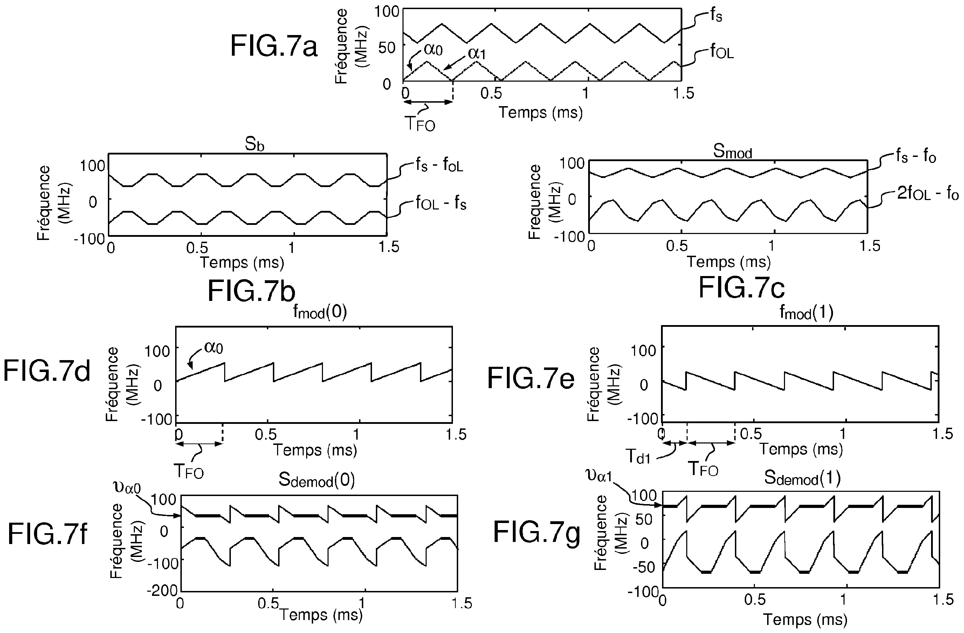

La figure 7a illustre la variation en fonction du temps de la fréquence de l'oscillateur local f$_{OL}$(t) et de la fréquence signal fs(t). La figure 7b illustre les deux composantes fréquentielles du signal de battement lidar Sb, fs-f$_{OL}$ et f$_{OL}$-fs. La figure 7c illustre la variation en fonction du temps de la fréquence du signal modulé obtenu S$_{mod}$. Les figures 7d et 7e illustrent respectivement la variation en fonction du temps des fréquences de démodulation f$_{mod}$(0) (pente α0) et f$_{mod}$(1) (pente α1). Les figures 7f et 7g illustrent respectivement la variation en fonction du temps du signal démodulé S$_{demod}$(0) et S$_{demod}$(1).

La figure 8 illustre les densités spectrales SP(0) (figure 8a) et SP(1) (figure 8b) des spectres déterminés à partir des signaux S$_{demod}$(0) et S$_{demod}$(1).

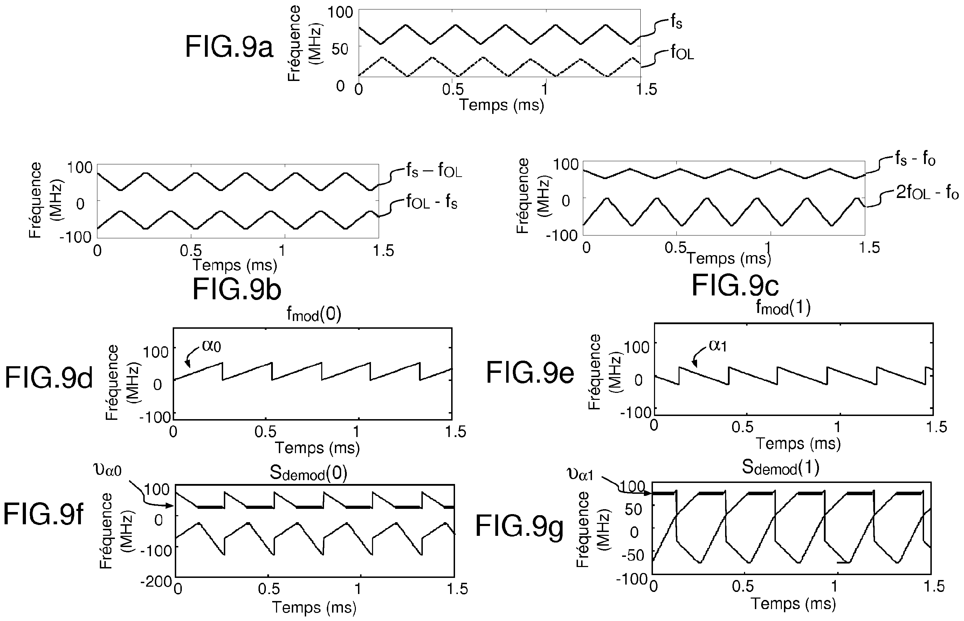

La figure 9 est équivalente à la figure 7 mais pour une cible située à une distance de 18 km. La figure 9a illustre la variation en fonction du temps de la fréquence de l'oscillateur local f$_{OL}$(t) et de la fréquence signal fs(t). La figure 9b illustre les deux composantes fréquentielles du signal de battement lidar Sb, fs-f$_{OL}$ et f$_{OL}$-fs. La figure 9c illustre la variation en fonction du temps de la fréquence du signal modulé obtenu S$_{mod}$. Les figures 9d et 9e illustrent respectivement la variation en fonction du temps des fréquences de démodulation f$_{mod}$(0) (pente α0) et f$_{mod}$(1) (pente α1). Les figures 9f et 9g illustrent respectivement la variation en fonction du temps du signal démodulé S$_{demod}$(0) et S$_{demod}$(1).

La figure 10a illustre la variation au cours du temps des fréquences f$_{OL}$(t) et f$_s$(t) et la figure 10b illustre l'évolution au cours du temps de fs -f$_{OL}$ pour le cas où f$_{mod}$ présente 4 pentes.

La figure 11a illustre la variation au cours du temps des fréquences f$_{OL}$(t) et f$_s$(t), la figure 11b illustre les deux composantes fréquentielles du signal de battement lidar Sb, fs-f$_{OL}$ et f$_{OL}$-fs, la figure 11c illustre la variation en fonction du temps de la fréquence du signal modulé obtenu S$_{mod}$ pour une forme d'onde comprenant 4 pentes.

Les figures 12a, 12b, 12c et 12d illustrent respectivement la variation en fonction du temps des fréquences de démodulation f$_{mod}$(0) (pente α0) et f$_{mod}$(1) (pente α1), f$_{mod}$(2) (pente a2) et f$_{mod}$(3) (pente a3), et les figures 12e, 12f, 12g et 12h illustrent respectivement la variation en fonction du temps du signal démodulé S$_{demod}$(0), S$_{demod}$(1), S$_{demod}$(2) et S$_{demod}$(3).

La figure 13 schématise un système lidar selon l'invention.

La figure 14 illustre un exemple d'implémentation d'une architecture parallèle de l'unité de traitement du lidar selon l'invention.

## DESCRIPTION DETAILLEE DE L'INVENTION

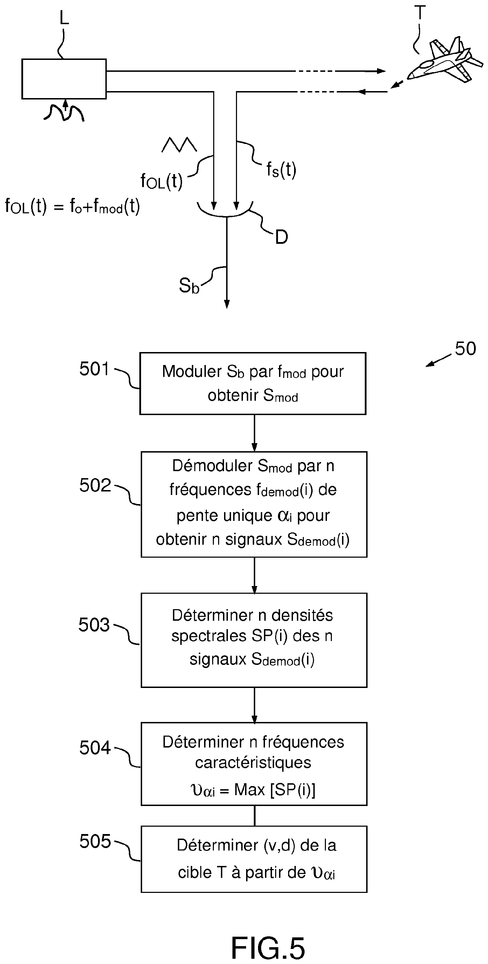

La méthode de traitement 50 du signal issu d'un lidar cohérent selon l'invention est décrite figure 5. Le lidar cohérent comprend une source cohérente L modulée périodiquement selon un signal RF. La modulation RF peut être réalisée directement par le courant d'injection du laser ou par un composant extérieur. Par RF on entend une onde présentant une fréquence comprise entre 1 Hz et 10 GHz, et préférentiellement entre 0.1 kHz et 10 MHz.

Un signal de battement Sb est généré par un photodétecteur D à partir de l'interférence entre un signal optique, dénommé oscillateur local OL présentant une fréquence oscillateur local f$_{OL}$(t), et un signal optique fs(t) rétrodiffusé par une cible T illuminée par le lidar. Le signal de battement est numérisé pour être traité.

La fréquence oscillateur local f$_{OL}$(t) est constituée de la somme d'une valeur moyenne f0 et d'une fréquence de modulation f$_{mod}$(t) issue de la modulation de la source.

$$f_{OL}(t) = f0 + f_{mod}(t)$$

Lorsque qu'aucun modulateur acoustique de décalage n'est utilisé, la fréquence f0 est égale à la fréquence optique initiale de la source L. Lorsque le signal OL est décalé en fréquence par un modulateur acousto optique, la fréquence f0 est égale à la fréquence optique de la source décalée.

La fréquence de modulation f$_{mod}$(t) est périodique selon une période de modulation T$_{FO}$, et provient de la modulation RF périodique de la source, mais n'est pas équivalente à cette dernière, du fait du comportement non linéaire du laser. Typiquement la période T$_{FO}$ est comprise entre 1 ns et une seconde, et préférentiellement entre 100 ns et 10 ms.

Pour que la méthode selon l'invention fonctionne correctement, la fréquence de modulation f$_{mod}$(t) doit être telle que chaque période comprenne n parties linéaires, soit n pentes de fréquence $\alpha i$, avec i indice variant de 0 à n-1, qui se joignent selon des sommets. Le nombre de pentes n est supérieur ou égal à 2.

Avantageusement, n est pair, car, comme précisé ci-dessous, cela permet d'alterner les signes des pentes $\alpha i$ et de simplifier ainsi le traitement de signal.

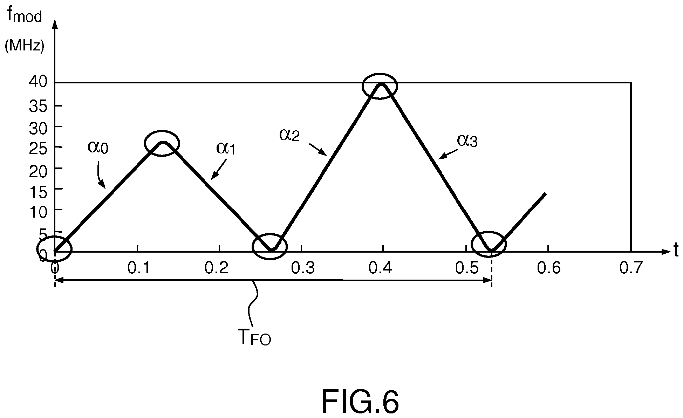

En pratique compte tenu de la bande de fréquence de modulation accessible pour les lasers actuels, il est difficile d'obtenir des angles aigus pour ces sommets, et ceux-ci sont généralement arrondis, comme illustré figure 6 pour une fréquence $f_{mod}(t)$ constituée d'une suite de 4 pentes $\alpha 0$, $\alpha 1$, $\alpha 2$ et $\alpha 3$. La forme du signal de modulation de $f_{mod}$ sur une période $T_{FO}$ est dénommée forme d'onde.

Préférentiellement, la pente d'indice i+1 $\alpha_{i+1}$ présente un signe opposé à la pente d'indice i $\alpha_i$. Cela permet de réduire la bande de fréquence couverte en maintenant la même fraction de la période $T_{FO}$ pour chaque pente (et donc le même ordre de grandeur d'intensité des raies pour chaque pente de fréquence).

Préférentiellement, les pentes d'indices impairs sont égales à l'opposé des pentes d'indice pair.

Pour un signal $f_{mod}$ à deux pentes $\alpha_1 = -\alpha 0$

Pour un signal $f_{mod}$ à quatre pentes $\alpha_1 = -\alpha 0$ et $\alpha 3 = -\alpha 2$

Dans ce dernier cas, la forme d'onde peut être divisée en quatre parties égales (conduisant à quatre raies d'intensité proche) sans avoir recours à des discontinuités de fréquence.

Préférentiellement, les pentes $\alpha i$ sont comprises entre 0.1 MHz/$\mu$s et quelque centaines de MHz/$\mu$s.

A noter qu'il n'est pas aisé d'obtenir une fréquence optique oscillateur local modulée selon une suite de pentes linéaires prédéterminées tel qu'illustré sur la figure 6. Pour cela il convient de pré-corriger le signal RF de modulation de la source, comme par exemple décrit dans la demande de brevet FR N° 1500603. Pour l'application de l'invention, la forme d'onde de $f_{mod}$ est supposé connue avec une bonne précision.

Avant de décrire les étapes de la méthode 50 selon l'invention, nous allons préciser la terminologie employée.

On dénomme modulation l'opération consistant à ajouter une fréquence à un signal initial et démodulation l'opération consistant à soustraire une fréquence du signal initial. Ainsi moduler à +f est équivalent à démoduler à -f et réciproquement.

Dans l'espace des temps, la modulation ou la démodulation consistent à multiplier un signal temporel initial S0(t) par un nombre, qui est un nombre réel pour une modulation/démodulation réelle (un cosinus) et un nombre complexe pour une modulation/démodulation complexe.

Par exemple moduler de manière complexe par une fréquence f équivaut à multiplier S0(t) par exp(2j$\pi$ft). De même démoduler de manière complexe par une fréquence f équivaut à multiplier S0(t) par exp(-2j$\pi$ft). Lorsque la

$$\exp\left[ 2j\pi \int\limits_0^t f\left(u\right)du \right]$$

fréquence f(t) est fonction du temps, il convient de multiplier par ⎿ ⏌ pour une modulation et par

$$\exp\left[ -2j\pi \int\limits_0^t f\left(u\right)du \right]$$

pour une démodulation.

La méthode 50 selon l'invention consiste en un traitement numérique spécifique d'un signal issu d'un lidar cohérent, pour la détermination des informations en vitesse et en distance d'une cible illuminée par le lidar. Plus particulièrement la méthode s'applique au traitement du signal de battement lidar Sb. Les premières étapes de la méthode sont illustrées figure 7 pour le cas d'un signal $f_{mod}$ présentant deux pentes $\alpha 0$ et $\alpha 1$.

La méthode 50 selon l'invention comprend une première étape 501 consistant à moduler de manière complexe le signal de battement Sb par la fréquence de modulation $f_{mod}$ pour obtenir un signal modulé $S_{mod}$.

La figure 7a illustre la variation en fonction du temps de la fréquence de l'oscillateur local $f_{OL}(t)$ et de la fréquence signal fs(t), la fréquence optique moyenne f0 ayant été soustraite pour plus de clarté.

La figure 7b illustre les deux composantes fréquentielles du signal de battement lidar Sb, fs-$f_{OL}$ et $f_{OL}$-fs. En effet celui-ci étant réel, il présente une composante de fréquence positive et une composante de fréquence négative.

La figure 7c illustre la variation en fonction du temps de la fréquence du signal modulé obtenu $S_{mod}$. Le signal réel de battement lidar Sb est modulé en complexe numériquement par une fréquence associée à la forme d'onde, c'est-à-dire $f_{OL}$-f0 , avec f0 fréquence moyenne de la source laser L. On reconstruit alors pour le signal modulé $S_{mod}$ une fréquence instantanée correspondant à :

$$fs\text{-}f_{OL} + (f_{OL}\text{-}f0) = fs\text{-}f0$$

$$f_{OL} \cdot fs + (f_{OL} - f0) = 2f_{OL} - f0 - fs$$

Ensuite une étape 502 consiste à démoduler de manière complexe le signal modulé $S_{mod}$ par n fréquences de démodulation $f_{demod}(i)$ présentant une pente unique respectivement égale à une pente de fréquence $\alpha i$ de la fréquence de modulation $f_{mod}$, pour obtenir n signaux démodulés $S_{demod}(i)$. Ainsi n démodulations complexes sont appliquées à l'aide de n signaux numériques $f_{demod}(i)$ de pente unique $\alpha i$.

Pour prendre en compte la périodicité de la forme d'onde, il convient de revenir régulièrement à zéro. Les fréquences de démodulation $f_{demod}(i)$ sont préférentiellement périodiques selon un multiple de $T_{FO}$, et préférentiellement présentent une période égale à $T_{FO}$. Cette égalité permet de faire coïncider les plateaux de fréquence (et donc les raies, après analyse spectrale) des différentes périodes de forme d'onde analysées : pour chaque pente de fréquence $\alpha i$, la raie associée apparaitra à la même fréquence $v_{\alpha i}$ et, par conséquent, l'énergie associé à un signal de cible sera concentrée dans la même raie après analyse temps-fréquence.

Les figures 7d et 7e illustrent respectivement la variation en fonction du temps des fréquences de démodulation $f_{mod}(0)$ (pente a0) et $f_{mod}(1)$ (pente $\alpha 1$).

Afin de recaler les différentes fréquences, la fréquence de démodulation d'indice i (correspondant à une pente $\alpha i$) est décalée d'un temps de décalage tdi dépendant de i, de n et de la période de modulation $T_{FO}$. Préférentiellement, le temps de décalage est égal à :

$$tdi = i/n * T_{FO}$$

Ainsi pour 2 pentes $f_{mod}(0)$ n'est pas décalée et $f_{mod}(1)$ est décalée de $T_{FO}/2$ (voir figure 7e).

Les figures 7f et 7g illustrent respectivement la variation en fonction du temps du signal démodulé $S_{demod}(0)$ et $S_{demod}(1)$.

Chaque démodulation correspond à la recherche du signal d'intérêt dans l'ensemble des cases distances. On retrouve alors dans le signal démodulé d'indice i un plateau de fréquence caractéristique $v_{\alpha i}$. Pour le cas de 2 pentes, $S_{demod}(0)$ permet de déterminer $v_{\alpha 0}$ tandis que $S_{demod}(1)$ permet de déterminer $v_{\alpha 1}$. La fréquence $v_{\alpha i}$ correspond à l'écart, mesuré à un temps pour lequel fs(t)-f0 présente une pente de fréquence $\alpha i$, entre la fréquence de démodulation $f_{mod}(i)$ et la fréquence fs(t)-f0, elle-même ayant été reconstituée à l'aide de la modulation du signal de battement par la fréquence $f_{OL}$-f0.

Chaque fréquence $v_{\alpha i}$ correspond à l'écart, mesuré à un temps pour lequel fs(t)-f0 présente une pente de fréquence $\alpha i$, entre la fréquence de démodulation $f_{mod}(i)$ et la fréquence fs(t)-f0, elle-même ayant été reconstituée à l'aide de la modulation du signal de battement par la fréquence $f_{OL}$-f0. Dans la figure 7f, le plateau le plus large correspond à $+v_{\alpha 0}$ tandis que le plateau plus faible correspond à $-v_{\alpha 0}$. En effet on adapte la fonction de démodulation à la fréquence d'intérêt, ici $+v_{\alpha 0}$ (vitesse radiale de la cible positive). De la même manière dans la figure 7g, le plateau le plus large correspond à $+v_{\alpha 1}$ tandis que le plateau plus faible correspond à $-v_{\alpha 1}$.

Afin de mesurer ces fréquences caractéristiques, la méthode 50 selon l'invention comprend également une étape 503 de détermination de n densités spectrales SP(i) des n signaux démodulés $S_{demod}(i)$. Il s'agit de réaliser une analyse temps/fréquence, soit transformée fréquentielle du signal $S_{demod}(i)$ (t), pour faire apparaître la fréquence caractéristique $v_{\alpha i}$ sous forme de pics. Avantageusement, il est possible d'inclure un fenêtrage temporel qui dépend de la plage de distance d'analyse et de la pente de fréquence d'analyse.

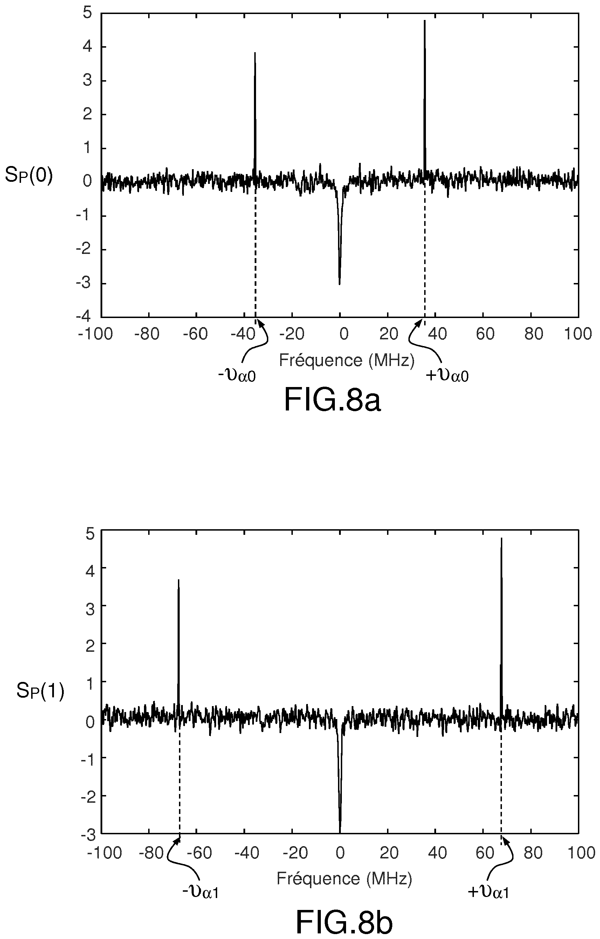

La figure 8 illustre les densités spectrales SP(0) (figure 8a) et SP(1) (figure 8b) des spectres déterminés à partir des signaux $S_{demod}(0)$ et $S_{demod}(1)$. La fréquence caractéristique recherchée $v_{\alpha i}$ présente la densité spectrale la plus élevée. On retrouve un pic plus faible à la fréquence opposée. Un pic négatif à la fréquence zéro est dû à un filtrage du signal pour les basses fréquences.

Puis la méthode selon l'invention comprend une étape 504 de détermination des n fréquences caractéristiques $v_{\alpha i}$ correspondant respectivement au maximum des n densités spectrales SP(i). En effet la fréquence présentant le plateau le plus large dans le signal $S_{demod/i}(t)$, qui correspond à la fréquence caractéristique recherchée, est celle présentant la densité spectrale la plus élevée.

Un deuxième plateau de durée moins importante (et donc conduisant à une raie moins intense après analyse spectrale) est également présent mais la fréquence correspondante présente une densité spectrale plus faible que celle de la fréquence caractéristique. Ce signal provient des modulations et démodulations décrites précédemment sur l'autre composante du signal de battement générée par la détection réelle (composante de fréquence négative si le signal de cible correspond à une fréquence positive ou, inversement, composante de fréquence positive si le signal de cible correspond à une fréquence négative)

Enfin, la méthode 50 comprend une étape 505 de détermination d'une information de vitesse v et d'une information de distance D de la cible T à partir desdites n fréquences caractéristiques $v_{\alpha i}$, à partir de la formule :

$$v_{\alpha_i} = \frac{2v}{\lambda} - \frac{2\alpha_i D}{c}$$

Pour 2 pentes de fréquences :

$$v_{\alpha_0} = \frac{2v}{\lambda} - \frac{2\alpha_0 D}{c} \quad \text{et} \quad v_{\alpha_1} = \frac{2v}{\lambda} - \frac{2\alpha_1 D}{c}$$

A noter que les formules ci-dessus sont valables lorsque la fréquence du laser n'est pas décalée par un modulateur acousto-optique. Lorsque tel est le cas, avec $f_{MAO}$ fréquence de décalage, les fréquences caractéristiques se calculent avec la formule :

$$v_{\alpha_i} = \frac{2v}{\lambda} - \frac{2\alpha_i D}{c} + f_{MAO}$$

L'invention est bien entendu compatible d'un tel décalage en adaptant l'étape 505 de détermination de d et v à partir des valeurs des fréquences caractéristiques

La figure 7 correspond à une cible se déplaçant avec une vitesse de 40 m/s à une distance de 12km, et la forme d'onde du signal $f_{mod}$ comprend 2 pentes $\alpha0 = 0.2$ MHz/$\mu$s et $\alpha1 = -0.2$ MHz/$\mu$s pour une fréquence moyenne du laser de 1.55 $\mu$m, soit 193.41 THz. La période $T_{FO}$ est égale à 532 $\mu$s.

Les fréquences caractéristiques détectées sont $v_{\alpha0} = 35.6$ MHz et $v_{\alpha1} = 67.6$ MHz. Pour $S_{mod}(0)$, un pic plus faible reste à -35.6 MHz et pour $S_{mod}(1)$ à - 67.6 MHz correspondant au plateau le plus petit.

La figure 9 est équivalente à la figure 7 mais pour une cible située à une distance de 18 km.

La figure9a illustre la variation en fonction du temps de la fréquence de l'oscillateur local $f_{OL}(t)$ et de la fréquence signal fs(t),

La figure 9b illustre les deux composantes fréquentielles du signal de battement lidar Sb, fs-$f_{OL}$ et $f_{OL}$-fs.

La figure 9c illustre la variation en fonction du temps de la fréquence du signal modulé obtenu $S_{mod}$.

Les figures 9d et 9e illustrent respectivement la variation en fonction du temps des fréquences de démodulation $f_{mod}(0)$ (pente a0) et $f_{mod}(1)$ (pente $\alpha1$).

Les figures 9f et 9g illustrent respectivement la variation en fonction du temps du signal démodulé $S_{demod}(0)$ et $S_{demod}(1)$ .

On constate que les plateaux réapparaissent, même à plus longue distance. Les fréquences caractéristiques détectées sont $v_{\alpha0} = 27.6$ MHz et $v_{\alpha1} = 75.6$ MHz. Il ne reste presque plus de pics à - 27.6 MHz et -75.6 MHz

Ainsi la méthode proposée évite de tester toutes les cases distance (solution couteuse en calcul) et permet, par une simple opération modulation/démodulation, de retrouver la distance de la cible, tant que la puissance du laser reste suffisante. Les pics issus du signal rétrodiffusé réapparaissent, permettant ainsi d'obtenir une méthode qui n'est plus limitée par le traitement du signal, mais uniquement par la puissance du laser.

Le calcul s'effectue à partir du signal de battement Sb(t) numérisé au fur et à mesure de l'écoulement du temps.

Mathématiquement, l'étape 501 de modulation par la fréquence

$$f_{mod}(t) = f_{OL}(t) - f0$$

revient à multiplier le signal Sb(t) par un nombre complexe C(t), également numérisé, égal à :

$$C = \exp\left[2j\pi \int_0^t (f_{OL}(u) - f_0)du\right] = \exp\left[2j\pi \int_0^t f_{mod}(u)du\right]$$

Soit $S_{mod}(t) = C* Sb(t)$
f0 : fréquence du laser sans modulation
$f_{OL}$ : fréquence de l'oscillateur local

Puis dans l'étape 502 de démodulation, chaque démodulation revient à multiplier le signal Smod(t) par un nombre complexe Ci(t) défini comme suit :

$$C_i = \exp\left\{-2j\pi\int_0^t\left[\alpha_i.\left(u-\left(\frac{n}{2}g_i(u)+floor\left(\frac{i+1}{2}\right)\right)*\frac{T_{FO}}{2}\right)\right]du\right\}$$

Avec i indice de la pente $\alpha i$, avec i varaint de 0 à n-1,
$T_{FO}$ : période de la forme d'onde

$$g_i(u) = floor\left(\frac{4u}{nT_{FO}}-\frac{i}{n}\right)$$

floor étant la fonction arrondi inférieure (par exemple floor(2.6) =2 et floor(-3.2)=-4)
Soit au final :

$$S_{de\,mod/i}(t) = S_b(t).\exp\left\{2j\pi\int_0^t\left[f_{OL}(u)-f_0-\alpha_i.\left(u-\left(\frac{n}{2}g_i(u)+floor\left(\frac{i+1}{2}\right)\right)*\frac{T_{FO}}{2}\right)\right]du\right\}$$

$$S_{de\,mod/i}(t) = S_b(t).\exp\left\{2j\pi\int_0^t\left[f_{mod}(u)-\alpha_i.\left(u-\left(\frac{n}{2}g_i(u)+floor\left(\frac{i+1}{2}\right)\right)*\frac{T_{FO}}{2}\right)\right]du\right\}$$

La partie aiu correspond à la partie linéaire, la partie n/2.gi(u).$T_{FO}$/2 exprime le retour à zéro régulier et le décalage temporel, et la partie floor(i+1/2)*

$T_{FO}$/2 correspond à un décalage en fréquence permettant de ramener à fréquence nulle une situation pour laquelle la vitesse et la distance de la cible sont nulles. Ce dernier décalage en fréquence compense un effet parasite généré par le décalage temporel associé à la fonction $g_i(u)$.

A noter que si les sommets de la forme d'onde sont arrondis, ces équations restent valables car cet arrondi est pris en compte dans la définition de $S_{mod}(t)$.

L'étape 503 d'obtention des densités spectrales SP(i) s'effectue typiquement par transformée fréquentielle, en prenant le carré du module de la transformée de Fourier du signal temporel $S_{demod/i}(t)$ :

$$SP_i(v) = \left|FFT\{S_{de\,mod/i}(t)\}\right|^2 = \left|FFT\left\{S_b(t).\exp\left[2j\pi\int_0^t\left(f_{mod}(u)-\alpha_i.\left(u-\left(\frac{n}{2}g_i(u)+floor\left(\frac{i+1}{2}\right)\right)*\frac{T_{FO}}{2}\right)\right)du\right]\right\}\right|^2$$

Préférentiellement, l'étape 503 de détermination de chaque densité spectrale comprend les sous étapes consistant à :

- déterminer une pluralité de densités spectrales élémentaires pour une pluralité d'intervalles de temps $\delta t$ inférieurs ou égaux à la période de modulation $T_{FO}$,
- déterminer chaque densité spectrale d'indice i SP(i) à partir de la somme de la pluralité de densités spectrales élémentaires.

Préférentiellement, chaque densité spectrale élémentaire est déterminée par transformée de Fourier rapide FFT.

En effet pour simplifier le traitement les transformées de Fourier réalisées pendant la période de la forme d'onde peuvent être directement sommées (en puissance). On réalise donc une accumulation incohérente de densités spectrales élémentaires, qui sont ensuite moyennées.

Cette opération permet de réaliser des calculs rapides, chaque densité spectrale élémentaire étant calculée sur un temps $\delta t$ court.

Par exemple, pour une fréquence d'échantillonnage de 125 MHz et une période $T_{FO}$ de 500 $\mu$s, réaliser plusieurs

calculs de FFT sur un $\delta t$ de 30$\mu$s

(correspondant à 4000 points) est beaucoup plus performant que d'effectuer un calcul sur la durée totale de $T_{FO}$ (trop de points).

De plus, réaliser une moyenne sur un certain nombre de FFT pendant une période $T_{FO}$ permet d'améliorer le rapport signal sur bruit de SPi(v) sans perte d'information en choisissant judicieusement les instants où l'on accumule le signal. En effet, le bruit est généralement limité par le bruit de photon. Le signal et le bruit présentent une statistique de chi2 et, par conséquent, le rapport signal sur bruit diminue en 1/sqrt(N) où N désigne le nombre de densités spectrales moyennées. Les figures 8a et 8b correspondent à une moyenne des densités spectrales SP(0) et SP(1) effectuée sur plusieurs centaines de FFT (N= 864).

Le signal décrit par les fréquences instantanées entre les plateaux a une puissance proportionnelle à la puissance du signal concentré dans les plateaux de fréquence, mais il est réparti sur un nombre de canaux spectraux nettement plus importants. Après analyse temps/fréquence, ce signal est donc dilué dans la bande d'analyse et conduit :

- à courte distance à un bruit additionnel qui réduit le rapport signal sur bruit (SNR). Cette diminution n'est cependant pas importante puisqu'à courte distance, le SNR est élevé. Selon un mode de réalisation, si l'on souhaite éviter cette diminution, une étape de recherche des plages temporelles conduisant à un plateau de fréquence est ajoutée pour garantir un SNR maximal.
- à longue distance (pour un SNR plus faible), le bruit additionnel reste inférieur aux bruits de détection (notamment le bruit de photon de l'oscillateur local), mais réduire le temps d'accumulation aux seuls instants où le signal est présent permet de réduire le bruit de détection.

Par ailleurs, réaliser une moyenne sur un certain nombre de FFT pendant une période $T_{FO}$ permet de caler la durée d'une transformée de Fourier sur le temps de cohérence de la cible (qui dépend notamment des mouvements de cette cible) ce qui optimise également le rapport signal sur bruit.

La densité spectrale calculée est préférentiellement égale à la moyenne des densités spectrales élémentaires, afin de toujours obtenir des valeurs numériques normalisées.

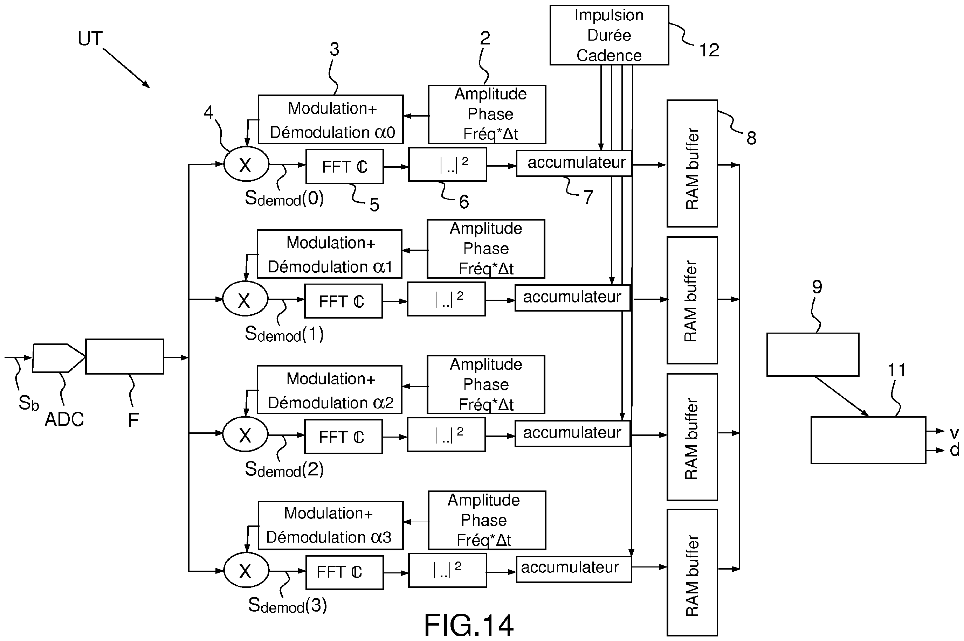

D'un point de vue pratique, les calculs de modulation/démodulation, puis de FFT et du carré du module s'effectuent au fur et à mesure de la numérisation du signal de battement, en temps réel. Puis au bout d'un certain temps d'accumulation, les densités spectrales SP(i) sont obtenues en effectuant la moyenne des densités spectrales élémentaires accumulées (voir plus loin figure 14).

L'invention s'applique pour toute valeur de n supérieure ou égale à 2. La figure 7 illustre la méthode appliquée pour n=2. Pour lever les ambiguïtés associées aux éventuels repliements, on utilise préférentiellement une forme d'onde avec 4 rampes de fréquences $\alpha0$, $\alpha1$, $\alpha2$, $\alpha3$. En effet, la détermination de 4 fréquences caractéristiques conduit à un système de 4 équations, avec 2 inconnues, v et d. Ceci permet d'obtenir une redondance et donc d'utiliser une des équations pour lever les ambiguïtés associées aux éventuels repliements de spectres et une autre comme paramètre de confiance. Ce paramètre de confiance peut par exemple être le résidu de l'inversion entre les fréquences $v_{\alpha i}$ et la vitesse radiale et distance. Cette inversion peut être obtenue par une technique de type moindres carrés, éventuellement pondéré de manière itérative (Iteratively reweighted least squares - IRLS).

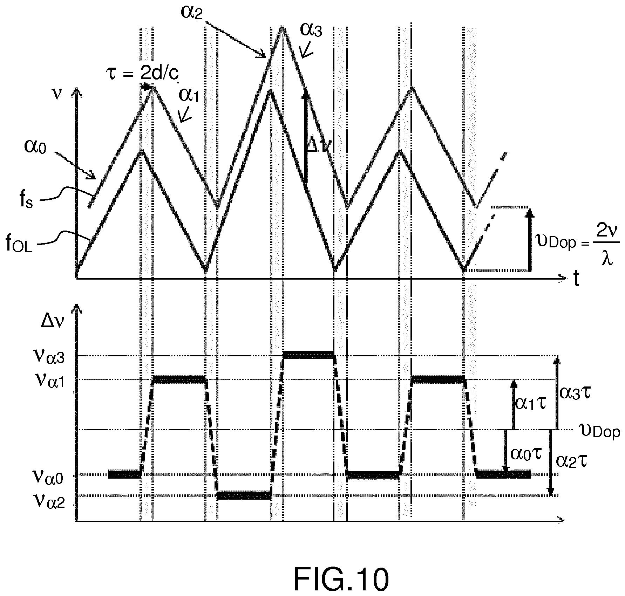

De même que pour la figure 7 pour le cas d'une forme d'onde à 2 pentes, la figure 10a illustre la variation au cours du temps des fréquences $f_{OL}(t)$ et $f_s(t)$, la fréquence optique moyenne f0 ayant été soustraite pour plus de clarté. La figure 10b illustre l'évolution au cours du temps de fs -$f_{OL}$ pour le cas à 4 pentes. On voit sur la figure 10b que cette variation de fréquence au cours du temps présente 4 plateaux correspondant aux 4 fréquences caractéristiques.

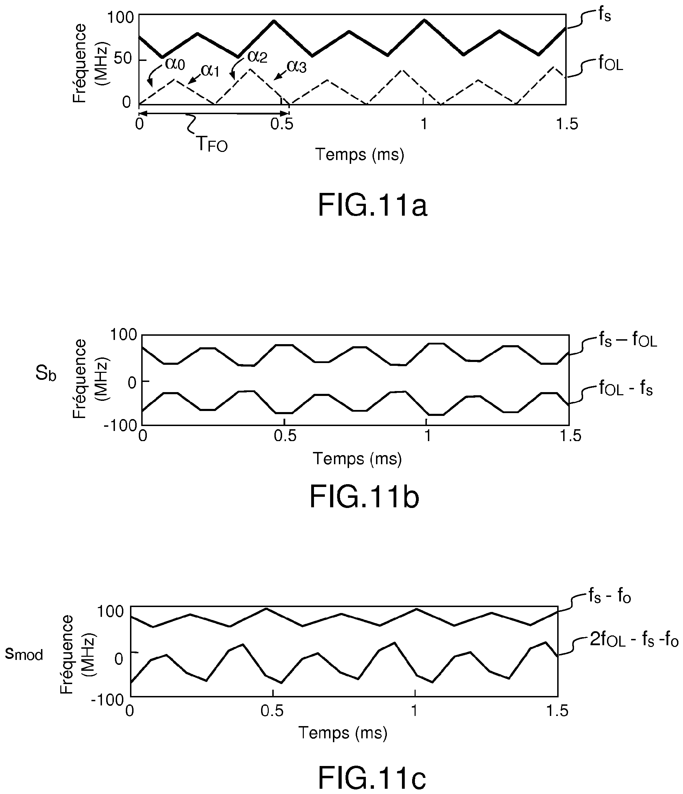

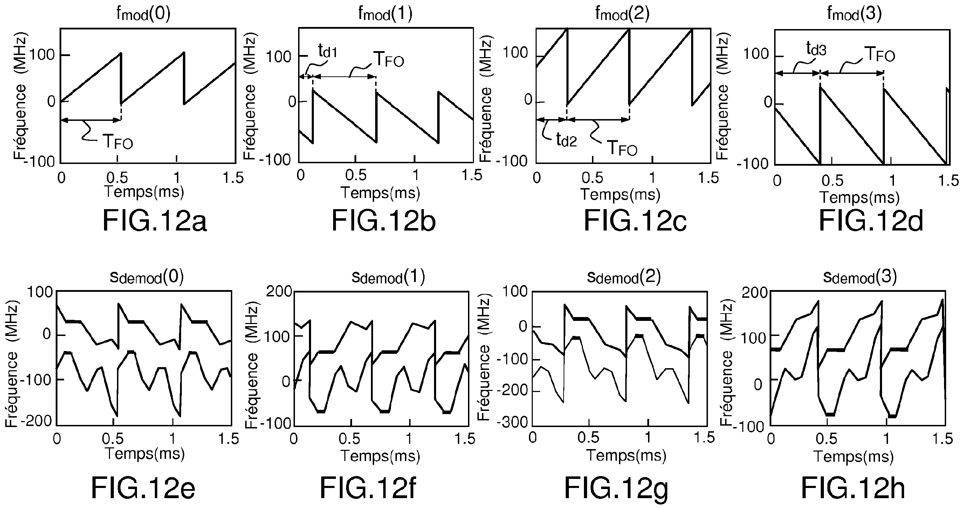

De même que pour la figure 7 pour le cas d'une forme d'onde à 2 pentes, la figure 11b illustre les deux composantes fréquentielles du signal de battement lidar Sb, fs-$f_{OL}$ et $f_{OL}$-fs, la figure 11c illustre la variation en fonction du temps de la fréquence du signal modulé obtenu $S_{mod}$ pour une forme d'onde comprenant 4 pentes. Les figures 12a, 12b, 12c et 12d illustrent respectivement la variation en fonction du temps des fréquences de démodulation $f_{mod}(0)$ (pente a0) et $f_{mod}(1)$ (pente a1), $f_{mod}(2)$ (pente a2) et $f_{mod}(3)$ (pente $\alpha3$), et les figures 12e, 12f, 12g et 12h illustrent respectivement la variation en fonction du temps du signal démodulé $S_{demod}(0)$, $S_{demod}(1)$, $S_{demod}(2)$ et $S_{demod}(3)$.

Pour 4 pentes, $f_{mod}(O)$ n'est pas décalée (voir figure 12a), $f_{mod}(1)$ est décalée de $T_{FO}/4$ (voir figure 12b), $f_{mod}(2)$ est décalée de $T_{FO}/2$ (voir figure 12c), $f_{mod}(3)$ est décalée de ¾.$T_{FO}$ (voir figure 12d).

Les figures 10 et 11 correspondent au cas d'une cible située à 12 km, se déplaçant à 40 m/s, la fréquence fmod présentant les valeurs de pentes suivantes (laser de fréquence optique f0 = 1.55 $\mu$m):

$\alpha0$ = 0.2 MHz/$\mu$s
$\alpha1$ = -0.2 MHz/$\mu$s
$\alpha2$ = 0.3 MHz/$\mu$s
$\alpha3$ = -0.3 MHz/$\mu$s

Par transformée dans l'espace fréquentiel, on détecte les fréquences caractéristiques (plateaux les plus longs) : 35.6 MHz ($\alpha_0$), 67.6 MHz ($\alpha_1$), 27.6 MHz ($\alpha_2$) et 75.6 MHz ($\alpha_3$).

Il reste également des pics plus faibles aux fréquences opposées.

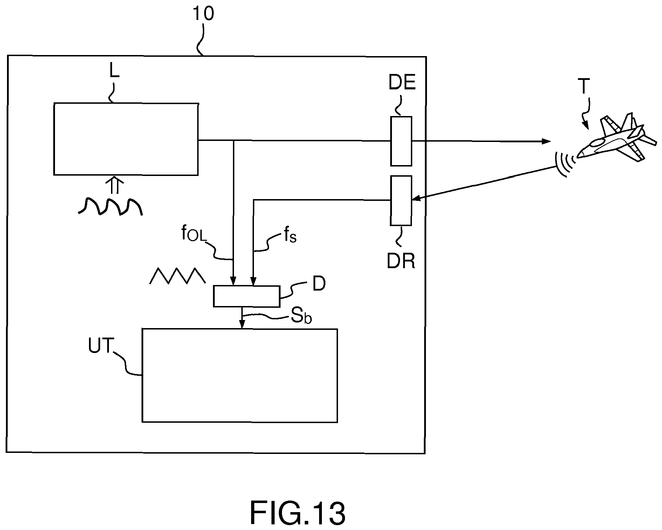

L'invention concerne également un système lidar cohérent illustré figure 13 et comprenant :

- une source cohérente L modulée périodiquement en fréquence,
- un dispositif d'émission DE d'un signal optique issu de la source cohérente et un dispositif de réception DR d'un signal rétrodiffusé par une cible T illuminée par le lidar,
- un photodétecteur D configuré pour générer un signal de battement Sb à partir de l'interférence entre un signal optique dénommé oscillateur local présentant une fréquence d'oscillateur local $f_{OL}(t)$ et le signal optique rétrodiffusé, la fréquence d'oscillateur local $f_{OL}(t)$ étant constituée de la somme d'une valeur moyenne f0 et d'une fréquence de modulation $f_{mod}(t)$ issue de la modulation de la source, la fréquence de modulation étant périodique selon une période de modulation $T_{FO}$, chaque période comprenant n parties linéaires présentant respectivement n pentes de fréquence $\alpha i$, n étant supérieur ou égal à 2, i variant de 0 à n-1,
- une unité de traitement UT configurée pour :

  *numériser le signal de battement,
  *moduler de manière complexe le signal de battement Sb par la fréquence de modulation $f_{mod}$ pour obtenir un signal modulé $S_{mod}$,
  *démoduler de manière complexe le signal modulé $S_{mod}$ par n fréquences de démodulations $f_{demod}(i)$ présentant chacune une pente unique égale à la pente de fréquence $\alpha i$ respective de la fréquence de modulation pour obtenir n signaux démodulés $S_{demod}(i)$,
  *déterminer n densités spectrales SP(i) des n signaux démodulés,
  *déterminer n fréquences caractéristiques $v_{\alpha i}$ correspondant respectivement au maximum des n densités spectrales SP(i),
  *déterminer une information de vitesse v et une information de distance d de la cible T à partir desdites n fréquences caractéristiques $v_{\alpha i}$.

Avantageusement, l'unité de traitement UT est en outre configurée pour déterminer, pour chaque densité spectrale, une pluralité de densités spectrales élémentaires pour une pluralité d'intervalles de temps inférieurs ou égaux à la période de modulation $T_{FO}$, la densité spectrale **SP(i)** étant déterminée à partir de la somme de la pluralité de densités spectrales élémentaires. Préférentiellement chaque densité spectrale élémentaire est déterminée par transformée de Fourier rapide FFT. Préférentiellement la densité spectrale est égale à une moyenne des densités spectrales élémentaires.

Préférentiellement, l'unité de traitement UT comprend n voies, une voie par pente, chaque voie fonctionnant en parallèle des autres et étant configurée pour déterminer la fréquence associée. En effet, la modulation et la démodulation peuvent être conduites simultanément, conduisant ainsi à un coût de calcul réduit (constitué d'une seule multiplication complexe).

Un exemple d'implémentation d'une architecture parallèle à 4 voies (4 pentes) de l'unité de traitement UT est illustré figure 14.

Le signal de battement Sb est numérisé à l'aide d'un convertisseur analogique /digital ADC (par exemple un convertisseur 14 bits, 125 MHz) puis éventuellement filtré par un filtre fréquentiel F. Le signal numérisé et filtré est ensuite réparti sur les 4 voies. Chaque voie fonctionne en parallèle des autres et effectue la même chaîne de traitement. Seule la valeur de la fréquence de démodulation $f_{demod}(i)$ (et son décalage temporel) est différente d'une chaîne à l'autre.

Le module 2 permet de définir l'amplitude et la phase des fonctions de modulation et démodulation C et $f_{mod}(i)$. Le produit de ces fonctions est ensuite évalué dans le module 3.

Le module 4 permet de réaliser la multiplication complexe du signal de battement Sb numérisé par la fonction calculée dans le module 3 (produit de la fonction de modulation C par la fonction de démodulation $f_{mod}(i)$).

Le module 5 réalise les transformées de Fourier rapide (FFT) complexes. Le module 6 calcule la norme au carré des transformées de Fourier.

Le module 7 réalise la somme des densités spectrales de puissance pendant un temps déterminé par les caractéristiques fournies par le module 12 (durée, cadence...). Ce résultat est transféré dans un buffer 8 avant d'être transféré via un serveur TCP 9 et exploité, dans une seconde partie du traitement de signal qui peut être réalisé plus lentement. Cette seconde partie, module 11 sur la figure 14, permet de réaliser la détection de pics, l'évaluation des fréquences et effectue le calcul de v et d en prenant en compte l'ensemble de ces fréquences caractéristiques. Cette étape peut, par exemple, être réalisée par la technique des moindres carrés ou, par « Iteratively reweighted least squares » (IRLS), connue dans la littérature.

L'invention concerne également un produit programme d'ordinateur comprenant des instructions de code permettant d'effectuer les étapes de la méthode de traitement selon l'invention.

Dans les différentes variantes de réalisation du système selon l'invention, les modules de calcul peuvent être agencés selon différentes architectures, en particulier chaque étape du procédé peut être implémentée par un module distinct ou au contraire l'ensemble des étapes peuvent être regroupées au sein d'un module de calcul unique.

Chacun des modules de calcul que comporte le système selon l'invention peut être réalisé sous forme logicielle et/ou matérielle. Chaque module peut notamment consister en un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

**Revendications**

1. Méthode de traitement (50) d'un signal issu d'un lidar cohérent comprenant une source cohérente (L) modulée périodiquement en fréquence,

   - un signal de battement (Sb) étant généré par un photodétecteur (D) à partir de l'interférence entre un signal optique dénommé oscillateur local présentant une fréquence d'oscillateur local ($f_{OL}(t)$) et un signal optique rétrodiffusé par une cible (T) illuminée par le lidar, ledit signal de battement étant numérisé,
   - la fréquence d'oscillateur local ($f_{OL}(t)$) étant constituée de la somme d'une valeur moyenne (f0) et d'une fréquence de modulation ($f_{mod}(t)$) issue de la modulation de la source, la fréquence de modulation étant périodique selon une période de modulation ($T_{FO}$), chaque période comprenant n parties linéaires présentant respectivement n pentes de fréquence (ai), n étant supérieur ou égal à 2, La méthode étant **caractérisée en ce qu'**elle comprend les étapes suivantes :
   - moduler (501) de manière complexe le signal de battement (Sb) par la fréquence de modulation ($f_{mod}$) pour obtenir un signal modulé ($S_{mod}$),
   - démoduler (502) de manière complexe le signal modulé ($S_{mod}$) par n fréquences de démodulation ($f_{demod}(i)$) présentant chacune une pente unique égale à la pente de fréquence (ai) respective de la fréquence de modulation ($f_{mod}$), pour obtenir n signaux démodulés ($S_{demod}(i)$),
   - déterminer (503) n densités spectrales (SP(i)) des n signaux démodulés ($S_{demod}(i)$),
   - déterminer (504) n fréquences caractéristiques ($v_{ai}$) correspondant respectivement au maximum des n densités spectrales (SP(i)),
   - déterminer (505) une information de vitesse (v) et une information de distance (d) de la cible (T) à partir desdites n fréquences caractéristiques (Vai).

2. Méthode selon la revendication 1 dans laquelle l'étape de détermination de chaque densité spectrale comprend les sous étapes consistant à :

   - déterminer une pluralité de densités spectrales élémentaires pour une pluralité d'intervalles de temps inférieurs ou égaux à la période de modulation (($T_{FO}$),
   - déterminer ladite densité spectrale (SP(i)) à partir de la somme de la pluralité de densités spectrales élémentaires.

3. Méthode selon la revendication 2 dans laquelle chaque densité spectrale élémentaire est déterminée par transformée de Fourier rapide (FFT), et dans laquelle la densité spectrale est égale à une moyenne des densités spectrales élémentaires.

4. Méthode selon l'une des revendications 1 ou 2 dans laquelle chaque fréquence de démodulation ($f_{demod}(i)$) est périodique selon la période de modulation ($T_{FO}$)

5. Méthode selon la revendication 4 dans laquelle les pentes de fréquence (ai) sont indicées par un indice i variant de 0 à n-1 et dans laquelle chaque fréquence de démodulation ($f_{demod}(i)$) présentant une pente d'indice i est décalée temporellement par rapport à la fréquence de modulation (fmod) d'un temps de décalage (tdi) dépendant de i, de n et de la période de modulation ($T_{FO}$).

6. Méthode selon l'une des revendications précédentes dans laquelle la forme d'onde comprend 4 pentes $\alpha0$, $\alpha1$, $\alpha2$, $\alpha3$ avec :
   $\alpha1 = -\alpha_0$ et $\alpha3 = -\alpha2$

**7.** Système lidar cohérent comprenant :

- une source cohérente (L) modulée périodiquement en fréquence,
- un dispositif d'émission (DE) d'un signal optique issu de la source cohérente et un dispositif de réception (DR) d'un signal rétrodiffusé par une cible (T) illuminée par le lidar,
- un photodétecteur (D) configuré pour générer un signal de battement (Sb) à partir de l'interférence entre un signal optique dénommé oscillateur local présentant une fréquence d'oscillateur local ($f_{OL}(t)$) et le signal optique rétrodiffusé, la fréquence d'oscillateur local ($f_{OL}(t)$) étant constituée de la somme d'une valeur moyenne (f0) et d'une fréquence de modulation ($f_{mod}(t)$) issue de la modulation de la source, la fréquence de modulation étant périodique selon une période de modulation ($T_{FO}$), chaque période comprenant n parties linéaires présentant respectivement n pentes de fréquence (ai), n étant supérieur ou égal à 2,

**caractérisé en ce qu'**une unité de traitement (UT) est configurée pour:

*numériser le signal de battement,
*moduler de manière complexe le signal de battement (Sb) par la fréquence de modulation ($f_{mod}$) pour obtenir un signal modulé ($S_{mod}$),
*démoduler de manière complexe le signal modulé ($S_{mod}$) par n fréquences de démodulations ($f_{demod}(i)$) présentant chacune une pente unique égale à la pente de fréquence (ai) respective de la fréquence de modulation pour obtenir n signaux démodulés ($S_{demod}(i)$),
*déterminer n densités spectrales (SP(i)) des n signaux démodulés,
*déterminer n fréquences caractéristiques ($v_{\alpha i}$) correspondant respectivement au maximum des n densités spectrales (SP(i)),
*déterminer une information de vitesse (v) et une information de distance (d) de la cible (T) à partir desdites n fréquences caractéristiques ($v_{\alpha i}$).

**8.** Système lidar selon la revendication 7 dans laquelle l'unité de traitement (UT) est en outre configurée pour déterminer, pour chaque densité spectrale, une pluralité de densités spectrales élémentaires pour une pluralité d'intervalles de temps inférieurs ou égaux à la période de modulation ($T_{FO}$), ladite densité spectrale (SP(i)) étant déterminée à partir de la somme de la pluralité de densités spectrales élémentaires.

**9.** Système lidar selon la revendication 8 dans laquelle chaque densité spectrale élémentaire est déterminée par transformée de Fourier rapide (FFT), et dans laquelle la densité spectrale est égale à une moyenne des densités spectrales élémentaires.

**10.** Système lidar selon l'une des revendications 7 à 9 dans laquelle l'unité de traitement (UT) comprend n voies, une voie par pente, chaque voie fonctionnant en parallèle des autres et étant configurée pour déterminer la fréquence associée.

**11.** Un produit programme d'ordinateur, ledit programme d'ordinateur comprenant des instructions de code permettant d'effectuer les étapes de la méthode de traitement selon l'une quelconque des revendications 1 à 6.

**Patentansprüche**

**1.** Verfahren zum Verarbeiten (50) eines Signals von einem kohärenten Lidar umfassend eine kohärente Quelle (L), die periodisch frequenzmoduliert wird,

- wobei ein Schwebungssignal (Sb) durch einen Photodetektor (D) auf der Basis der Interferenz zwischen einem als Lokaloszillator bezeichneten optischen Signal mit einer Lokaloszillatorfrequenz ($f_{OL}(t)$) und einem optischen Signal erzeugt wird, das von einem durch das Lidar beleuchteten Ziel (T) zurückgestreut wird, wobei das Schwebungssignal digitalisiert ist,
- wobei die Lokaloszillatorfrequenz ($f_{OL}(t)$) aus der Summe aus einem Mittelwert (f0) und einer Modulationsfrequenz ($f_{mod}(t)$) besteht, die sich aus der Modulation der Quelle ergibt, wobei die Modulationsfrequenz periodisch gemäß einer Modulationsperiode ($T_{FO}$) ist, wobei jede Periode n lineare Teile jeweils mit n Frequenzsteigungen (ai) umfasst, wobei n gleich oder größer als 2 ist, wobei das Verfahren **dadurch gekennzeichnet ist, dass** es die folgenden Schritte umfasst:
- komplexes Modulieren (501) des Schwebungssignals (Sb) mit der Modulationsfrequenz ($f_{mod}$), um ein moduliertes Signal ($S_{mod}$) zu erhalten,

- komplexes Demodulieren (502) des modulierten Signals ($S_{mod}$) mit n Demodulationsfrequenzen ($f_{demod}(i)$) jeweils mit einer einzigen Steigung, die gleich der jeweiligen Frequenzsteigung (ai) der Modulationsfrequenz ($f_{mod}$) ist, um n demodulierte Signale ($S_{demod}(i)$) zu erhalten,
- Bestimmen (503) von n Spektraldichten (SP(i)) der n demodulierten Signale ($S_{demod}(i)$),
- Bestimmen (504) von n charakteristischen Frequenzen ($v_{\alpha i}$), die jeweils dem Maximum der n Spektraldichten (SP(i)) entsprechen,
- Bestimmen (505) einer Geschwindigkeitsinformation (v) und einer Entfernungsinformation (d) des Ziels (T) auf der Basis der n charakteristischen Frequenzen ($v_{\alpha i}$).

2. Verfahren nach Anspruch 1, wobei der Schritt des Bestimmens jeder Spektraldichte die folgenden Teilschritte umfasst:

- Bestimmen einer Vielzahl von elementaren Spektraldichten für eine Vielzahl von Zeitintervallen, die genauso groß wie oder kleiner als die Modulationsperiode (($T_{FO}$) sind,
- Bestimmen der Spektraldichte (SP(i)) auf der Basis der Summe der Vielzahl von elementaren Spektraldichten.

3. Verfahren nach Anspruch 2, wobei jede elementare Spektraldichte durch schnelle Fourier-Transformation (FFT) bestimmt wird und wobei die Spektraldichte gleich einem Mittelwert der elementaren Spektraldichten ist.

4. Verfahren nach einem der Ansprüche 1 oder 2, wobei jede Demodulationsfrequenz ($f_{demod}(i)$) periodisch gemäß der Modulationsperiode ($T_{FO}$) ist.

5. Verfahren nach Anspruch 4, wobei die Frequenzsteigungen (ai) durch einen Index i indiziert werden, der von 0 bis n-1 variiert, und wobei jede Demodulationsfrequenz ($f_{demod}(i)$) mit einer Steigung von Index i in Bezug auf die Modulationsfrequenz ($f_{mod}$) um eine von i, n und der Modulationsperiode ($T_{FO}$) abhängige Verschiebungszeit (tdi) zeitlich verschoben wird.

6. Verfahren nach einem der vorherigen Ansprüche, wobei die Wellenform 4 Steigungen $\alpha 0$, $\alpha 1$, $\alpha 2$, $\alpha 3$ umfasst, wobei: $\alpha 1 = -\alpha 0$ und $\alpha 3 = -\alpha 2$ ist.

7. Kohärentes Lidarsystem, das Folgendes umfasst:

- eine kohärente Quelle (L), die periodisch frequenzmoduliert wird,
- ein Gerät (DE) zum Senden eines optischen Signals von der kohärenten Quelle und ein Gerät (DR) zum Empfangen eines Signals, das von einem durch das Lidar beleuchtete Ziel (T) zurückgestreut wird,
- einen Photodetektor (D), konfiguriert zum Erzeugen eines Schwebungssignals (Sb) auf der Basis der Interferenz zwischen einem als Lokaloszillator bezeichneten optischen Signal mit einer Lokaloszillatorfrequenz ($f_{OL}(t)$) und dem zurückgestreuten optischen Signal, wobei die Lokaloszillatorfrequenz ($f_{OL}<t$)) aus der Summe aus einem Mittelwert (f0) und einer Modulationsfrequenz ($f_{mod}(t)$) von der Modulation der Quelle besteht, wobei die Modulationsfrequenz periodisch gemäß einer Modulationsperiode ($T_{FO}$) ist, wobei jede Periode n lineare Teile mit jeweils n Frequenzsteigungen (ai) umfasst, wobei n gleich oder größer als 2 ist,

**dadurch gekennzeichnet, dass** eine Verarbeitungseinheit (UT) konfiguriert ist zum:

\* Digitalisieren des Schwebungssignals,
\* komplexen Modulieren des Schwebungssignals (Sb) mit der Modulationsfrequenz ($f_{mod}$), um ein moduliertes Signal ($S_{mod}$) zu erhalten,
\* komplexen Demodulieren des modulierten Signals ($S_{mod}$) mit n Demodulationsfrequenzen ($f_{demod}(i)$) jeweils mit einer einzigen Steigung, die gleich der jeweiligen Frequenzsteigung (ai) der Modulationsfrequenz ist, um n demodulierte Signale ($S_{demod}(i)$) zu erhalten,
\* Bestimmen von n Spektraldichten (SP(i)) der n demodulierten Signale,
\* Bestimmen von n charakteristischen Frequenzen ($v_{\alpha i}$), die jeweils dem Maximum der n Spektraldichten (SP(i)) entsprechen,
\* Bestimmen einer Geschwindigkeitsinformation (v) und einer Entfernungsinformation (d) des Ziels (T) auf der Basis der n charakteristischen Frequenzen ($v_{\alpha i}$).

8. Lidarsystem nach Anspruch 7, wobei die Verarbeitungseinheit (UT) ferner konfiguriert ist zum Bestimmen, für jede Spektraldichte, einer Vielzahl von äquivalenten Spektraldichten für eine Vielzahl von Zeitintervallen, die genauso groß wie oder kleiner als die Modulationsperiode ($T_{FO}$) sind, wobei die Spektraldichte ($SP(i)$) auf der Basis der Summe der Vielzahl von äquivalenten Spektraldichten bestimmt wird.

9. Lidarsystem nach Anspruch 8, wobei jede elementare Spektraldichte durch schnelle Fourier-Transformation (FFT) bestimmt wird und wobei die Spektraldichte gleich einem Mittelwert der elementaren Spektraldichten ist.

10. Lidarsystem nach einem der Ansprüche 7 bis 9, wobei die Verarbeitungseinheit (UT) n Kanäle umfasst, einen Kanal pro Steigung, wobei jeder Kanal parallel zu den anderen arbeitet und zum Bestimmen der assoziierten Frequenz konfiguriert ist.

11. Computerprogrammprodukt, wobei das Computerprogramm Code-Befehle umfasst, die das Durchführen der Schritte des Verarbeitungsverfahrens nach einem der Ansprüche 1 bis 6 zulassen.

**Claims**

1. A method for processing (50) a signal generated by a coherent lidar comprising a coherent source (L) that is periodically modulated in frequency,

   - a beat signal (Sb) being generated by a photodetector (D) from the interference between an optical signal referred to as the local oscillator, having a local-oscillator frequency ($f_{OL}(t)$), and an optical signal backscattered by a target (T) illuminated by the lidar, said beat signal being digitized,
   - the local-oscillator frequency ($f_{OL}(t)$) consisting of the sum of an average value (f0) and of a modulation frequency ($f_{mod}(t)$) that is generated by modulating the source, the modulation frequency being periodic with a modulation period ($T_{FO}$), each period comprising n linear portions having n frequency slopes ($\alpha i$), respectively, n being higher than or equal to 2,

   the method being **characterized in that** it comprises the steps of:

   - modulating (501) in a complex way the beat signal (Sb) with the modulation frequency ($f_{mod}$) in order to obtain a modulated signal ($S_{mod}$),
   - demodulating (502) in a complex way the modulated signal ($S_{mod}$) with n demodulation frequencies ($f_{demod}(i)$) each having a single slope equal to the respective frequency slope ($\alpha i$) of the modulation frequency ($f_{mod}$), in order to obtain n demodulated signals ($S_{demod}(i)$),
   - determining (503) n spectral densities ($SP(i)$) of the n demodulated signals ($S_{demod}(i)$),
   - determining (504) n characteristic frequencies ($v_{\alpha i}$) corresponding to the maximum of the n spectral densities ($SP(i)$), respectively,
   - determining (505) information on the velocity (v) and information on the distance (d) of the target (T) from said n characteristic frequencies ($v_{\alpha i}$).

2. The method according to claim 1, wherein the step of determining each spectral density comprises the substeps of:

   - determining a plurality of elementary spectral densities for a plurality of time intervals shorter than or equal to the modulation period ($T_{FO}$),
   - determining said spectral density ($SP(i)$) from the sum of the plurality of elementary spectral densities.

3. The method according to claim 2, wherein each elementary spectral density is determined by fast Fourier transform (FFT), and wherein the spectral density is equal to an average of the elementary spectral densities.

4. The method according to any one of claims 1 or 2, wherein each demodulation frequency ($f_{demod}(i)$) is periodic with the modulation period ($T_{FO}$).

5. The method according to claim 4, wherein the frequency slopes ($\alpha i$) are indexed by an index i varying from 0 to n-1 and wherein each demodulation frequency ($f_{demod}(i)$) having a slope of index i is temporally shifted with respect to the modulation frequency (fmod) by a shift time (tdi) that is dependent on i, on n and on the modulation period ($T_{FO}$).

6. The method according to any one of the preceding claims, wherein the waveform comprises 4 slopes $\alpha 0$, $\alpha 1$, $\alpha 2$,

α3 with:

$$\alpha1 = -\alpha0 \text{ and } \alpha3 = -\alpha2$$

7.  A coherent lidar system comprising:

    - a coherent source (L) that is periodically modulated in frequency,
    - a device (DE) for emitting an optical signal generated by the coherent source and a device (DR) for receiving a signal backscattered by a target (T) that is illuminated by the lidar,
    - a photodetector (D) configured to generate a beat signal (Sb) from the interference between an optical signal referred to as the local oscillator, having a local-oscillator frequency ($f_{OL}$(t)), and the backscattered optical signal, the local-oscillator frequency ($f_{OL}$(t)) consisting of the sum of an average value (f0) and of a modulation frequency ($f_{mod}$(t)) that is generated by modulating the source, the modulation frequency being periodic with a modulation period ($T_{FO}$), each period comprising n linear portions having n frequency slopes ($\alpha i$), respectively, n being higher than or equal to 2,

    **characterized in that** a processing unit (UT) is configured to:

    * digitize the beat signal,
    * modulate in a complex way the beat signal (Sb) with the modulation frequency ($f_{mod}$) in order to obtain a modulated signal ($S_{mod}$),
    * demodulate in a complex way the modulated signal ($S_{mod}$) with n demodulation frequencies ($f_{demod}$(i)) each having a single slope equal to the respective frequency slope ($\alpha i$) of the modulation frequency in order to obtain n demodulated signals ($S_{demod}$(i)),
    * determine n spectral densities (SP(i)) of the n demodulated signals,
    * determine n characteristic frequencies ($v_{\alpha i}$) corresponding to the maximum of the n spectral densities (SP(i)), respectively,
    * determine information on the velocity (v) and information on the distance (d) of the target (T) from said n characteristic frequencies ($v_{\alpha i}$).

8.  The lidar system according to claim 7, wherein the processing unit (UT) is further configured to determine, for each spectral density, a plurality of elementary spectral densities for a plurality of time intervals shorter than or equal to the modulation period ($T_{FO}$), said spectral density (SP(i)) being determined from the sum of the plurality of elementary spectral densities.

9.  The lidar system according to claim 8, wherein each elementary spectral density is determined by fast Fourier transform (FFT), and wherein the spectral density is equal to an average of the elementary spectral densities.

10. The lidar system according to any one of claims 7 to 9, wherein the processing unit (UT) comprises n channels, one channel per slope, each channel operating in parallel with the others and being configured to determine the associated frequency.

11. A computer-program product, said computer program comprising code instructions allowing the steps of the processing method according to any one of claims 1 to 6 to be carried out.

FIG.1

FIG.2

FIG.3a

FIG.3b

FIG.4a

FIG.4b

FIG.4c

L

T

$f_{OL}(t)$

$f_s(t)$

$f_{OL}(t) = f_o + f_{mod}(t)$

D

$S_b$

| | |
|---|---|
| 501 | Moduler $S_b$ par $f_{mod}$ pour obtenir $S_{mod}$ |
| 502 | Démoduler $S_{mod}$ par n fréquences $f_{demod}(i)$ de pente unique $\alpha_i$ pour obtenir n signaux $S_{demod}(i)$ |
| 503 | Déterminer n densités spectrales SP(i) des n signaux $S_{demod}(i)$ |
| 504 | Déterminer n fréquences caractéristiques $\upsilon_{\alpha i} = Max\ [SP(i)]$ |
| 505 | Déterminer (v,d) de la cible T à partir de $\upsilon_{\alpha i}$ |

50

FIG.5

FIG.6

FIG.7a

FIG.7b

FIG.7c

FIG.7d

FIG.7e

FIG.7f

FIG.7g

FIG.8a

FIG.8b

FIG.9a

FIG.9b

FIG.9c

FIG.9d

FIG.9e

FIG.9f

FIG.9g

$$\tau = 2d/c$$

$$\upsilon_{Dop} = \frac{2v}{\lambda}$$

FIG.10

**FIG.11a**

**FIG.11b**

**FIG.11c**

FIG.12a
FIG.12b
FIG.12c
FIG.12d
FIG.12e
FIG.12f
FIG.12g
FIG.12h

FIG.13

FIG.14

## RÉFÉRENCES CITÉES DANS LA DESCRIPTION

**Documents brevets cités dans la description**

- EP 2618179 A1

- FR 1500603

**Littérature non-brevet citée dans la description**

- **FARZIN AMZAJERDIAN et al.** Lidar systems for précision navigation and safe landing on planetary bodies. *Proc. SPIE 8192, International Symposium on Photoelectronic Détection and Imaging 2011: Laser Sensing and Imaging; and Biological and Médical Applications of Photonics Sensing and Imaging,* 19 Août 2011